# EUROPEAN PATENT APPLICATION

(11) **EP 3 772 635 A1**
(43) Date of publication of application: **10.02.2021**
(21) Application number: 19190507.4
(22) Date of filing: 07.08.2019
(51) Int. Cl.: G01D 21/00, G08C 23/02, H04B 11/00

(54) **SENSING ARRANGEMENT FOR A CLOSED CONTAINER AND METHOD FOR TRANSMITTING DATA THROUGH THE CONTAINER WALL**

(71) Applicant: Sulzer Management AG, 8401 Winterthur (CH)
(72) Inventor: VERDET, Vincent, 8046 Zürich (CH)
(74) Representative: Henkel & Partner mbB

(57) **Abstract**

The present invention relates to a sensing arrangement (10) particularly for sensing a physical parameter inside a closed container (11) and to transmit the respective data through the container wall (14) to the outside of the container (11), comprising an inside circuit (12) arranged inside a closed container (11) and further comprising an outside circuit (13) arranged outside the closed container (11). The inside circuit (12) comprises a transmitter circuit (15) that is configured to create a controller output signal (OS) that characterizes information to be transmitted, such as sensor information (SI). A first inside piezoelectric transducer (24) of the transmitter circuit (15) creates an acoustic data signal (DS) based on the controller output signal (OS) and transmits the acoustic data signal (DS) through the wall (14) of the container (11) to a first outside piezoelectric transducer (30) of the controller outside circuit (13). The controller output signal (OS) and/or the data signal (DS) do not contain sensor information (SI) in the amplitude or phase or frequency of the controller output signal (OS) and/or the data signal (DS). The controller output signal (OS) is preferably pulse width modulated.

## Description

The present invention relates to a sensing arrangement for a closed container and to a method for using the sensing arrangement for transmitting data measured from a sensor located inside the container through the container wall to outside of the container.

In a plurality of applications, it is desirably to transmit data measured from a sensor located inside a closed container to the outside of the container, for instance through a steel wall of the container. Specifically, a sensor value detected by a sensor device of an inside circuit arranged inside the closed container shall be transmitted to an outside circuit arranged outside the container without routing a wire or other conductor through the container wall. Thus a wireless transmission is desired. However, depending on the material of the container it can be difficult or impossible to transmit electromagnetic waves through the container wall, e.g. if the container wall is made of a conducting material such as steel. Another issue that must be addressed is the wireless power supply of the inside circuit. This is particularly a challenge in applications in which inside the closed container a high temperature of 60°C or more and/or a pressure above or below atmospheric pressure prevails. An example for such an application is the transfer of data from the inside of a distillation or rectification column through its steel wall to the outside thereof.

ES 2 639 765 A1 discloses a sensing arrangement comprising an inside circuit arranged inside the container and an outside circuit outside the container. The inside circuit comprises a transmitter circuit having a sensor device, an inside controller, a digital-to-analog-converter and a first inside piezoelectric transducer. The inside controller forms binary words containing the sensor information. Based on this binary word the digital-to-analog-converter modulates a carrier signal by phase shift keying, such that the information to be transmitted is contained in the phase or phase changes of the analog signal that is used to control the first inside piezoelectric transducer which creates a corresponding acoustic data signal that is coupled into the wall of the container. The outside circuit comprises a receiver circuit having an outside controller, a first outside piezoelectric transducer and an analog-to-digital-converter. The acoustic data signal is received by the first outside piezoelectric transducer and forwarded to the analog-to-digital-converter for demodulation in order to retrieve the binary word from the analog signal. The inside circuit also comprises a power receiving circuit having an energy storage device and a second inside piezoelectric transducer. A power supply circuit of the outside circuit contains a power source and a second outside piezoelectric transducer. The power supply circuit creates a power signal coupled into the wall of the container via the second outside piezoelectric transducer. The second inside piezoelectric transducer receives this power signal and supplies electric power to the energy storage. The electric energy stored in the energy storage can be used to operate the inside circuit. However, the phase modulation requires complex circuits and thus consumes a remarkable amount of energy.

Another sensing arrangement is disclosed in US 2015/0049587 A1. The inside and the outside circuits use one single pair of piezoelectric transducers for simultaneous bidirectional transmission of data and energy. A carrier signal is modulated by the outside circuit and is able to transmit information and energy to the inside circuit. In the inside circuit the envelope of the carrier signal is determined and sampled with an analog-to-digital-converter. Inside to outside communication is realized by applying a continuous wave carrier signal created by the outside circuit on the piezoelectric transducer of the inside circuit. The transducer of the inside circuit is able to vary absorption or reflection characteristics and thus the continuous wave carrier signal can be modulated and reflected back to the outside circuit. Also this sensing arrangement is complex and consumes a lot of energy.

It is the object of the present invention to provide a sensing arrangement and a method particularly for sensing a physical parameter inside a closed container and to transmit the respective data through the container wall to the outside of the container, that is at least suitable for transmitting low amounts of data through the container wall, that is simple, robust particularly to high temperatures and/or high or low pressures prevailed in the container and minimizes the energy consumption.

This object is solved by a sensing arrangement with the features of claim 1 and a method with the features of claim 15.

The sensing arrangement of the present invention comprises an inside circuit configured to be arranged inside a closed container and an outside circuit configured to be arranged outside the closed container. The inside circuit comprises a transmitter circuit having a sensor device, an inside controller and a first inside piezoelectric transducer. The inside controller is configured to create an output signal containing sensor information received from the sensor device. The sensor information contains a sensor value that characterizes a physical parameter detected or measured by the sensor device. Thus also the controller output signal characterizes said physical parameter detected or measured by the sensor device. The controller output signal is applied to the first inside piezoelectric transducer. As a consequence the first inside piezoelectric transducer creates an acoustic data signal based on the controller output signal. The first inside piezoelectric transducer is arranged such that it couples the acoustic data signal into the wall of the container. The outside circuit has a receiver circuit. The receiver circuit comprises a first outside piezoelectric transducer and an outside controller. The first outside piezoelectric transducer is arranged to receive the acoustic data signal transmitted through the wall of the container. The outside controller is configured to retrieve the sensor information contained in the received data signal. The sensor information may be further processed and/or output (e.g. on a display) and/or transmitted to an external device.

The controller output signal and/or the data signal is created in a way without sensor information being contained in the amplitude or phase of the controller output signal and/or the data signal. Rather, it is for example preferred to encode the controller output signal and/or the data signal by varying the duration of at least one signal portion. The controller output signal and/or the data signal may simply contain a time sequence of distinguishable signal portions, for example at least one sequence of an oscillating signal portion and a constant signal portion. A binary value to be transmitted may be characterized by the duration of at least one signal portion and/or the number of oscillations contained in an oscillating signal portion. In doing so information may be encoded in the controller output signal and/or the data signal without the need to provide complex amplitude, phase or frequency modulating components. The simple and robust encoding of the acoustic data signal is insensitive against the low frequency vibration of an operating vessel that might affect the data signal during transmission through the container wall.

All in all, the sensing arrangement of the present invention is particularly suitable for sensing a physical parameter inside a closed container and to transmit the respective data through the container wall to the outside of the container and is simple, robust and minimizes the energy consumption. A further advantage is that the sensing arrangement does not need any multiplier or signal treatment.

Preferably the controller output signal is encoded to include the sensor information and can be used directly to drive the first inside piezoelectric transducer. Particularly after the acoustic data signal was created by the first inside piezoelectric transducer it is only coupled into the wall of the container without any further signal processing and/or encoding. In an advantageous embodiment the controller output signal is created to include the sensor information based on pulse width modulation. The controller output signal and data signal are thus pulse width modulated signals containing the sensor information and optionally additional information.

Due to the simple structure of the inside circuit only a low number of components are needed. These components can be selected to withstand harsh conditions inside the container. The container is for example a distillation or rectification column. The inside circuit in the distillation column is exposed to temperatures of at least 60°C and up to about 225°C.

In a preferred embodiment the inside controller is directly coupled with the first inside piezoelectric transducer for applying the controller output signal directly without further modification or amplification to the first inside piezoelectric transducer.

It is preferred to provide an asynchronous transmission. As explained above, the data signal can be transmitted from the inside circuit to the outside circuit. At any time electric power may be transmitted from the outside circuit to the inside circuit. The outside circuit may comprise a power supply circuit connected with a power source and comprising a second outside piezoelectric transducer. The power supply circuit is configured to create the power signal, preferably acoustic power signal, by controlling the second outside piezoelectric transducer. The second outside piezoelectric transducer is arranged to couple the power signal into the wall of the container. The power signal may have a constant oscillating frequency. In such an embodiment the inside circuit can comprise a power receiving circuit having an energy storage device and a second inside piezoelectric transducer. The second inside piezoelectric transducer is arranged to receive the power signal through the wall of the container. The oscillation applied to the second inside piezoelectric transducer is at least partly transformed in electric power and can be stored in the energy storage device for operating the inside circuit.

As mentioned before, the transmitter circuit of the inside circuit may be configured to create the controller output signal and/or the data signal using pulse width modulation. In one embodiment the controller output signal and/or the data signal comprises at least one and preferably a plurality of sequences each formed by an oscillating signal portion and a constant signal portion. The constant signal portion may directly follow the oscillating signal portion or vice versa. In such an embodiment the total duration of the at least one sequence and/or the duration of the oscillating signal portion and/or the duration of the constant signal portion may characterize one of a binary value. For example the duration of the oscillating portion may be varied, such that a first duration characterizes one of the binary values (e.g. "0") and a different second duration characterizes the respective other of the binary values (e.g. "1").

Preferably the amplitude and/or frequency of the oscillating signal portion is constant. The amplitude of the constant signal portion is constant and preferably zero.

In one embodiment the number of oscillations of one oscillating signal portion characterizes one of the two possible binary values. For example a first number of oscillations characterizes one of the binary values (e.g. "0") and a different second number of oscillations characterizes the respective other of the binary values (e.g. "1").

The transmitter circuit of the inside circuit may be configured to create the controller output signal and/or the data signal without sensor information being contained in the frequency of the (acoustic) data signal. Particularly no frequency modulation of an oscillating portion is performed to encode sensor information or other information that is to be retrieved in the outside circuit.

The transmitter circuit - and for example the sensor device - is preferably configured to provide information to be transmitted including at least the sensor information from the sensor device as a string of characters. This string of characters may then be encoded in binary values, e.g. by using an ASCII code or any other known code for defining characters. In doing so the string of characters can be converted character by character into a word of multiple binary values. This word is used to encode the controller output signal as already explained above.

The controller output signal may contain additional information other that the measured value, e.g. an identifier that characterizes the type of the measurement. The identifier associated with measured value can be any symbol or word that allows to identify the measured value, e.g. "T" or "Temp" could be used as identifier for a temperature value. Likewise "P" or "Pressure" could be used as s identifier for a pressure value and/or "H" or "Hum" could be used as s identifier for a humidity value. This allows to use more than one sensor device in the inside circuit. The controller output signal and the data signal may thus contain sensor information of more than one sensor device.

Preferred embodiments in accordance with the present invention are described with reference to the appended drawings in the following.
- Fig. 1: is a schematic illustration of a sensing arrangement comprising an inside circuit arranged inside a closed container and an outside circuit arranged outside the container.
- Fig. 2: is a schematic illustration of an embodiment an inside circuit and an outside circuit.
- Fig. 3: is a flowchart that illustrates a preferred method for encoding and decoding sensor information.
- Fig. 4: is a schematic illustration of a preferred principle to encode a controller output signal in the inside circuit.
- Fig. 5: is a schematic illustration of signal forms during signal processing in the inside circuit for encoding sensor information in an acoustic data signal, during acoustic signal transmission through a wall of the container and during signal processing in the outside circuit for retrieving the sensor information.
- Fig. 6: is a schematic illustration showing the different frequency amounts used for data transmission on one hand and used for power transmission on the other hand.

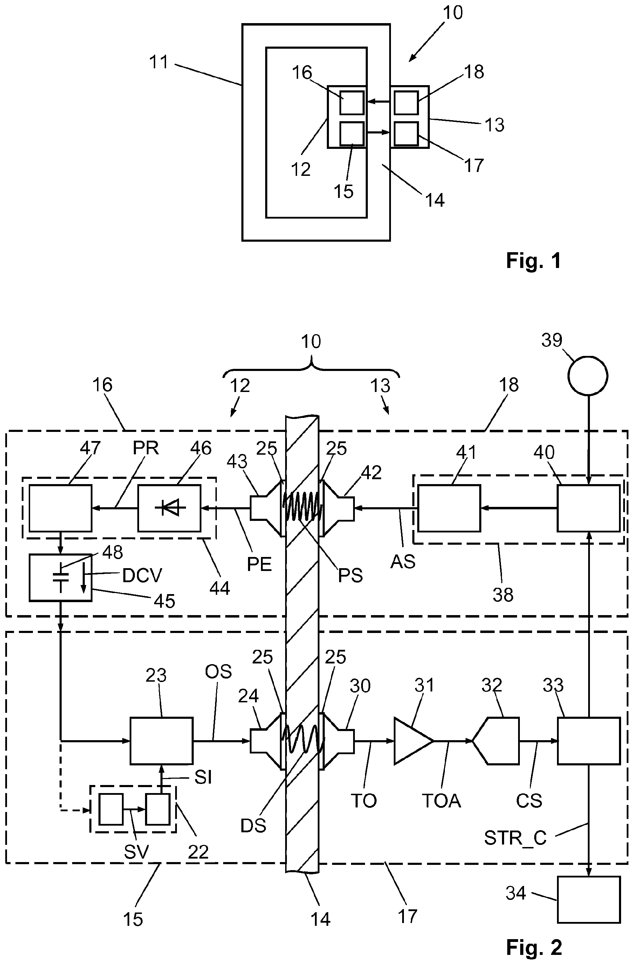

Figure 1 shows a highly schematic illustration of a sensing arrangement 10. The sensing arrangement 10 is configured to detect or measure a physical parameter inside a closed container 11, to create an acoustic data signal characterizing the physical parameter and to transmit the acoustic data signal wirelessly to the outside of the container 11. In the present embodiment the sensing arrangement 10 is further configured to supply energy wirelessly into the container 11. In the embodiment described herein the container 11 can be a distillation column.

The sensing arrangement 10 comprises an inside circuit 12 arranged inside the closed container 11 and an outside circuit 13 arranged outside the container 11. The inside circuit 12 and the outside circuit 13 communicate with each other wirelessly through one of the walls 14 of the container 11 by coupling acoustic oscillations into the wall 14 at the transmitting side and receiving the acoustic oscillations at the opposite receiving side.

The inside circuit 12 and the outside circuit 13 each contain one circuit part that is configured for inside to outside data transmission and another circuit part that is configured for outside to inside power transmission between the inside circuit 12 and outside circuit 13 respectively. Specifically the inside circuit 12 comprises a transmitter circuit 15 and a power receiving circuit 16 and the outside circuit 13 comprises a receiver circuit 17 and a power supply circuit 18.

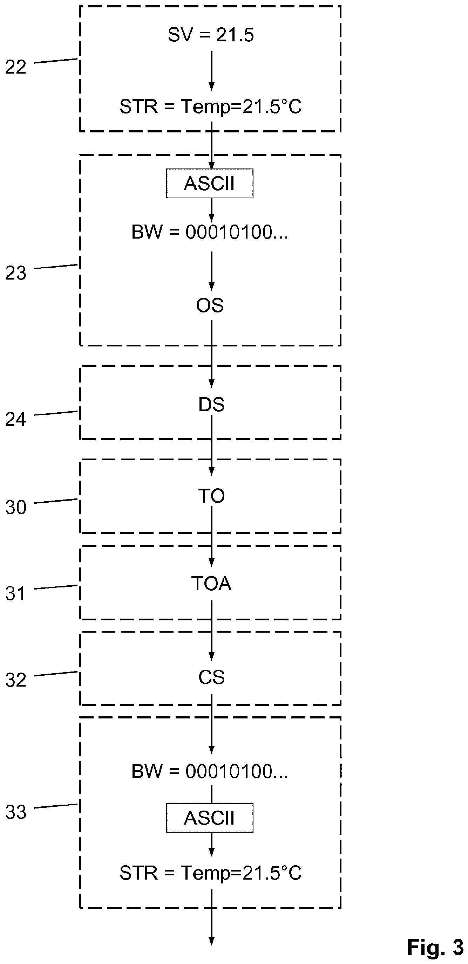

In figure 2 a preferred embodiment of the inside circuit 12 and the outside circuit 13 is schematically illustrated. The transmitter circuit 15 comprises a sensor device 22 that is configured to measure a physical parameter inside the container 11 as for example a temperature, a pressure, a humidity or any other desired value. The sensor device creates a sensor value SV based on the measurement. In the preferred embodiment the sensor device 22 is configured to create sensor information SI comprising the sensor value SV. The sensor information SI is transmitted to an inside controller 23 of the transmitter circuit 15. In this embodiment the sensor device 22 contains a library and the created sensor information SI may have the form of a string of characters STR as explained below with reference to figure 3 in more detail.

Based on the sensor information SI the inside controller 23 creates a controller output signal OS that is used to control a first inside piezoelectric transducer 24 of the transmitter circuit 15. In doing so the first inside piezoelectric transducer 24 produces an acoustic data signal DS that corresponds to the output signal OS. The first inside piezoelectric transducer 24 of the transmitter circuit 15 is coupled to the wall 14 of the container 11 and is thus arranged to couple the acoustic data signal DS in the wall 14 of the container 11 such that is can be transmitted through said wall 14 and received on the outside of the container 11.

The first inside piezoelectric transducer 24 is connected to the wall 14 by using any suitable connection means that may create a force fit and/or form fit and/or material bond connection. In this embodiment a connection layer 25 is provided between the first inside piezoelectric transducer 24 and the wall. This adhesive connection layer 25 provides a more elastic or flexible support to the first inside piezoelectric transducer 24 and ensures that it can vibrate or oscillate.Preferably the connection layer 25 can form an adhesive layer to fasten the first inside piezoelectric transducer 24 to the wall 14. For example, an acrylic material can be used as adhesive connection layer 25.

The receiver circuit 17 comprises a first outside piezoelectric transducer 30 that is coupled to the wall 14 preferably in direct alignment with the first inside piezoelectric transducer 24. The first outside piezoelectric transducer 30 can be connected to the wall 14 by any suitable connection means similar to the first inside piezoelectric transducer 24 and preferably by using an adhesive connection layer 25.

The receiver circuit 17 further comprises an amplifier 31, a comparator 32 and an outside controller 33. The first outside piezoelectric transducer 30 receives the acoustic data signal DS and creates an oscillating analog transducer output signal TO corresponding to the acoustic data signal DS. The first outside piezoelectric transducer 30 is connected with the amplifier 31 to provide the transducer output signal TO to the amplifier 31 that outputs an amplified transducer output signal TOA. The amplifier is connected with the comparator 32 and provides the amplified transducer output signal TOA to the input side of the comparator 32. The comparator 32 is configured to digitize the amplified transducer output signal TOA and outputs a corresponding comparator signal CS. The comparator 32 is connected with the outside controller 33 that is configured to receive the comparator signal CS. In the outside controller 33 the information contained in the acoustic data signal DS, particularly the sensor information SI, is retrieved and may be further processed or output. In the present embodiment, as illustrated, the outside controller 33 outputs the retrieved information contained in the acoustic data signal DS on a display 34 or any other suitable user interface device.

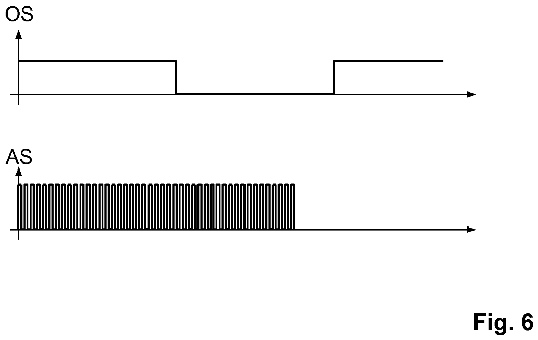

Still with reference to figure 2 the outside controller 33 is further configured to control a controllable power supply 38 of the power supply circuit 18. The power supply 38 is connected to an electrical power source 39, which can be an AC or DC power source 39. The power source 39 is for example the grid providing an AC power. The power supply 38 may comprise a switching unit 40 that converts the provided electrical power from the power source 39 into an alternating signal of higher frequency. The power supply 38 may additionally comprise a driver unit 41 to amplify the alternating signal. In doing so the power supply 38 produces an alternating supply signal AS. The alternating supply signal AS can be a square wave signal as illustrated schematically in figure 6. The power supply 38 can use any known converter topology for converting the electrical power provided by the power source 39 into the alternating supply signal AS. The alternating supply signal AS is output from the power supply 38 and used to control a second outside piezoelectric transducer 42. It creates an acoustic power signal PS that is coupled into the wall 14 for transmission to the power receiving circuit 16 of the inside circuit 12.

It is preferred that the acoustic power signal PS is an ultrasonic signal. In the present example the frequency of the alternating supply signal AS and the acoustic power signal PS is at least 1MHz. The frequency of the alternating supply signal AS and the acoustic power signal PS may be constant.

The second outside piezoelectric transducer 42 is connected to the wall 14 at a location distant from or directly adjacent to the first outside piezoelectric transducer 30 to couple the acoustic power signal PS into the wall 14. For receipt of the acoustic power signal PS the power receiving circuit 16 comprises a second inside piezoelectric transducer 43 that is coupled to the wall 14 preferably in direct alignment with the second outside piezoelectric transducer 42. The second inside piezoelectric transducer 43 is configured to create an electric power signal PE corresponding to the acoustic power signal PS received through the wall 14.

It is to be noted that similar to the other piezoelectric transducers 24, 30 also the second outside piezoelectric transducer 42 and the second inside piezoelectric transducer 43 can be connected to the wall 14 by any suitable connection means and preferably by using an adhesive connection layer 25. In the preferred embodiment, the resonance frequency of all of the piezoelectric transducers 24, 30, 42, 43 has an amount of about 40 kHz. Alternatively each pair of transducers may have different resonance frequencies. The transducers of one common pair 24, 30 and 42, 43 that are provided to communicate with each other have preferably the same resonance frequency and may be identical.

Additionally to the second inside piezoelectric transducer 43 the power receiving circuit 16 comprises a DC converter 44, and an energy storage device 45. The DC converter 44 is preferably directly connected to the second inside piezoelectric transducer 43 for receipt of the electric power signal PE. The DC converter 44 is configured to convert the alternating electric power signal PE into a DC voltage DCV that is suitable for operating the components of the inside circuit 12. The DC voltage DCV can have an amount of about 5 V in one preferred embodiment of the invention. An energy storage device 45 is connected to the output of the DC converter 44. The electric power provided by the DC converter 44 is stored in the energy storage device 45. The DC converter 44 is configured to control the DC voltage DCV at its output and at the energy storage device 45.

Specifically, as illustrated in figure 2, the DC converter 44 may comprise a rectifier 46, for example a diode bridge. The diode bridge comprises preferably four diodes for rectifying the electric power signal PE and thus providing a rectified power signal PR. Preferably the rectifier 46 does not contain any controllable switching elements, but is rather formed of diodes only. A voltage control 47 in series with the rectifier 46 is configured receive the rectified power signal PR and to supply DC electric power to the energy storage device 45 thereby controlling the DC voltage DCV to correspond to a preset DC voltage value. In the preferred embodiment the energy storage device 45 comprises at least one capacitor 48. The energy storage device 45 is preferably only formed by one or more capacitors 48 for storing the electric energy. As shown in figure 2 the controlled DC voltage DCV and the stored energy is provided for operating the transmitter circuit 15 and particularly the inside controller 23 and/or the sensor device 22.

As already mentioned, the container 11 can be a distillation column. The inside circuit 12 is exposed to temperatures of about 225°C and a chemical processed in the distillation column. Thus the components used for the inside circuit 12 have to withstand these harsh conditions. In the preferred embodiment the following components are used for the inside circuit 12:
- Honeywell HT83C51 as inside controller 23;
- a ceramic capacitor 48, e.g. Kemet TCR Series;
- Honeywell HTPLREG as voltage control 47;
- two CHT-CALLISTO (each containing two diodes) to form the diode bridge of the rectifier 46;
- TRS 200HD from TRS Technologies as piezoelectric transducers.

The whole inside circuit 12 is preferably encased into a protective plastic material, e.g.an epoxy. As an option the inside circuit 12 may be alternatively or additionally arranged inside a protective enclosure depending on the type of chemical processed inside the distillation column.

A variety of possibilities exist to ensure that sufficient energy is stored in the energy storage device 45 of the power receiving circuit 16. In this embodiment the outside controller 33 may activate the power supply circuit 18 in regular predefined time intervals or alternatively upon any trigger event such as upon receipt of a request. Following the activation of the power supply circuit 18 an acoustic power signal PS is created for a determined power transmission period. During this power transmission period the acoustic power signal PS may have a constant frequency of 1 MHz or more. The duration of the power transmission period is sufficient long such that enough electric power is transmitted to the power receiving circuit 16 that allows to operate the transmitter circuit 15 for transmission of at least one acoustic data signal DS to the receiver circuit 17. This procedure also allows to use the energy transmission to the power receiving circuit 16 as a trigger or request for transmitting an actual sensor information SI by means of the acoustic data signal DS.

With reference to figures 3 to 5 the signals created and used for the data transmission are explained in more detail.

As mentioned before the sensor device 22 measures a sensor value SV based on which a sensor information SI in form of a string of characters STR is created and transmitted to the inside controller 23. In the example of figure 3 the sensor device 22 is a temperature sensor and the string of characters STR comprises an identifier (e.g. "T" or "Temp" or "T=" or "TEMP=") indicating that the measured sensor value SV is a temperature value. The identifier can be at the beginning of the string of characters STR. Following the identifier the measured sensor value SV (e.g. temperature value) together with the respective unit is contained in the string of characters STR.

Alternatively to the illustrated embodiment the sensor value SV may be submitted from the sensor device 22 to the inside controller 23 and the inside controller 23 may be configured to create the string of characters STR.

Preferably the identifier contains a defined number of characters in the string of characters STR. Also the sensor value SV and the unit may contain a defined number of characters in the string of characters STR. In doing so the inside controller 23 may execute a plausibility check whether the string of characters STR comprises the predefined total number of characters. This allows a detection of at least some faults in the created or transmitted string of characters STR.

By means of the inside controller 23 this string of characters STR is converted into a binary word BW containing a plurality of binary values (0 or 1). For converting the string of characters STR an ASCII code or any other suitable code may be used. In this example, by using the ASCII code, each character in the string of characters STR is converted into an ASCII code number and this ASCII code number is converted into binary number forming a bit sequence of a defined length, e.g. a length of eight bit. Each bit sequence thus corresponds to one character of the string of characters STR. For example the first character of the identifier is "T", corresponding to the ASCII code value 020, which corresponds to the eight bit sequence 00010100. All the bit sequences are added to form a binary word BW. In this way all of the characters in the string of characters STR are transformed into a bit sequence and concatenated to form the complete binary word BW.

It has to be noted that the transmitter circuit 15 may also contain more than one sensor device 22. The inside controller 23 may add two or more strings of characters STR transmitted from the one or more sensor devices 22 to form one binary word BW. The identifiers contained in the binary word BW allow to identify each contained sensor value SV.

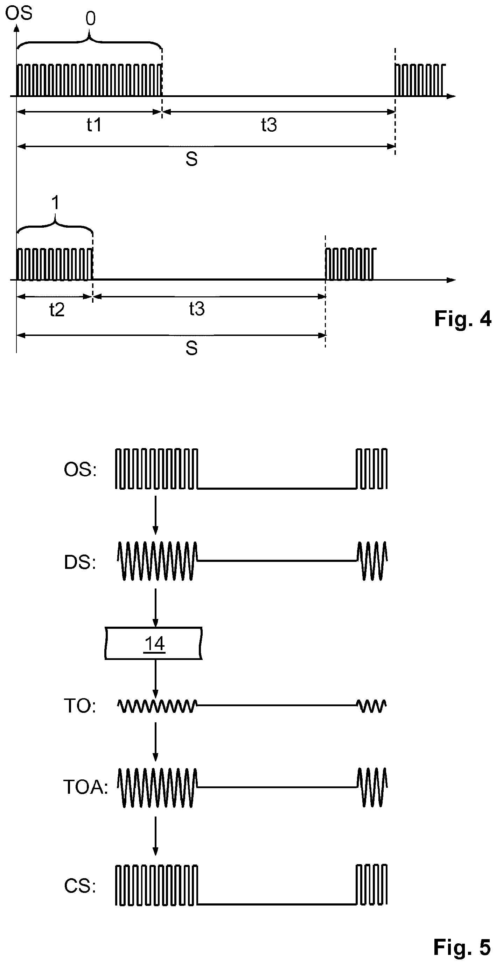

After having created the binary word BW the inside controller 23 creates a pulse width modulated controller output signal OS based on the binary word BW as schematically illustrated in figure 4.

The controller output signal OS is formed to comprise multiple sequences S each being formed by an oscillating signal portion PO and a constant signal portion PC. Preferably the oscillating signal portion PO is a square wave signal having a constant frequency and all pulses may have the same peak value. The constant signal portion PC has a constant amplitude, for example the amplitude of the constant signal portion PC may be zero. Thus each sequence S can be considered as a burst sequence.

In the present embodiment the duration of at least one of the signal portions PO, PC is varied, such that different duration amounts are specified that each correspond to an associated value. In this example two different duration amounts are defined: one for each binary value 0 or 1. It is also possible to distinguish between more than two different values if a respective number of different durations is used.

Specifically as illustrated in figure 4 the oscillating signal portion PO has either a first duration t1 corresponding to the binary value 0 or a second duration t2 corresponding to the binary value 1 or vice versa. Each oscillating signal portion PO is followed by a constant signal portion PC in order to distinguish the oscillating signal portions PO of individual sequences S from each other. In this example the second duration t2 is shorter than the first duration t1. The first duration t1 may be at least 1.5 to 2.0 times longer than the second duration t2. In one preferred embodiment the first duration t1 is 4 ms and the second duration t2 is 2 ms. This duration difference allows a clear distinction between the encoded binary values 0 and 1 even if the signal transmission is subject to noise.

The constant signal portion PC has preferably a constant third duration t3 that is at least as long as the first duration t1. In this embodiment the third duration t3 is at least 2.0 times longer than the first duration t1. The third duration t3 may have an amount of 10 ms. Keeping the third duration t3 of the constant signal portion PC constant and varying the duration of the oscillating signal portion PO varies the total duration of the sequence S as shown in figure 4 to keep the total time for signal transmission as short as possible.

The acoustic data signal DS is created by the first inside piezoelectric transducer 24 based on the pulse width modulated controller output signal OS and coupled into the wall 14 for transmission to the first outside piezoelectric transducer 30. As shown in figure 5 the amplitude of the acoustic data signal DS may be reduced due to damping effects during transmission. Accordingly the transducer output signal TO has a lower amplitude compared with the acoustic data signal DS. For this reason the amplifier 31 is provided and configured to amplify the transducer output signal TO. Accordingly the amplified transducer output signal TOA has an increased amplitude compared with the transducer output signal TO. The increased amplitude of the amplified transducer output signal TOA increases the discrimination accuracy of the comparator when digitizing the amplified transducer output signal TOA to form the comparator signal CS. As schematically illustrated in figure 5 the comparator signal CS comprises square wave alternating portions separated from each other by portions with a constant amplitude. The comparator signal is thus a digital signal mapping the sequences S contained in the controller output signal OS.

Turning back to figure 4 the outside controller 33 receives the comparator signal CS. For retrieving the contained sensor information SI, the outside controller 33 counts the pulses of each individual alternating portion in the comparator signal CS. Depending on the number of pulses contained in one individual alternating portion of the comparator signal CS, the outside controller 33 determines whether this alternating portion of the comparator signal CS corresponds to the binary value 0 or to the binary value 1. Specifically if the individual alternating portion of the comparator signal CS has a first number of pulses (e.g. 160 pulses) it was created based on an oscillating signal portion PO with a first duration t1 and if the individual alternating portion of the comparator signal CS has a second number of pulses (e.g. 80 pulses) it was created based on an oscillating signal portion PO with a second duration t1. In doing so the binary word BW can be decoded by the outside controller 33.

In a subsequent step the outside controller 33 uses the same code as the inside controller 23 for transforming the binary word BW back into the string of characters STR, in this embodiment the ASCII code. The decoded string of characters STR can be displayed and/or used otherwise.

Encoding the information to be transmitted based on the method of pulse width modulation in the pulse width modulated controller output signal OS as explained above reduces the complexity of the transmitter circuit 15 and the receiver circuit 17 remarkably. No information is encoded by modulating the amplitude, phase or frequency of the controller output signal OS. Also the pulse width modulated controller output signal OS and the corresponding acoustic data signal DS are insensitive to noise and the correct decoding of the contained information is simple and robust.

The frequency of the oscillating signal portion PO is preferably remarkably lower than the frequency of the alternating supply signal AS and the acoustic power signal PS as schematically illustrated in figure 6. This avoids interference between the acoustic power signal PS and the acoustic data signal DS in the case both signals PS, DS are transmitted concurrently or in overlapping time periods. The frequency of the oscillating signal portion PO may have an amount corresponding to the resonance frequency of the transducers, e.g. 40 kHz. The frequency of the alternating supply signal AS.

Due to the reduced complexity of the information transmission and the low number of required components, the power consumption of the transmission circuit 15 is low. Also the required space for the inside circuit 12 is low and may have an amount of about 60 cm³.

### List of reference signs:

- 10: sensing arrangement
- 11: container
- 12: inside circuit
- 13: outside circuit
- 14: wall of the container
- 15: transmitter circuit
- 16: power receiving circuit
- 17: receiver circuit
- 18: power supply circuit

- 22: sensor device
- 23: inside controller
- 24: first inside piezoelectric transducer
- 25: connection layer

- 30: first outside piezoelectric transducer
- 31: amplifier
- 32: comparator
- 33: outside controller
- 34: display

- 38: power supply
- 39: power source
- 40: switching unit
- 41: driver unit
- 42: second outside piezoelectric transducer
- 43: second inside piezoelectric transducer
- 44: DC converter
- 45: energy storage device
- 46: rectifier
- 47: voltage control
- 48: capacitor

- AS: alternating supply signal
- BW: binary word
- CS: comparator signal
- DCV: DC voltage
- DS: acoustic data signal
- PS: acoustic power signal
- OS: output signal
- PE: electric power signal
- PC: constant portion of the output signal
- PO: oscillating portion of the output signal
- PR: rectified power signal
- PS: acoustic power signal
- S: sequence
- SI: sensor information
- STR: string of characters
- SV: sensor value
- t1: first duration
- t2: second duration
- t3: third duration
- TO: transducer output signal
- TOA: amplified transducer output signal

## Claims

1. A sensing arrangement (10) particularly for sensing a physical parameter inside a closed container (11) and to transmit the respective data through the container wall (14) to the outside of the container (11), comprising an inside circuit (12) configured to be arranged inside a closed container (11) and further comprising an outside circuit (13) configured to be arranged outside the closed container (11),
wherein the inside circuit (12) comprises a transmitter circuit (15) having a sensor device (22), an inside controller (23) and a first inside piezoelectric transducer (24), wherein the inside controller (23) is configured to create a controller output signal (OS) containing sensor information (SI) from the sensor device (22) for controlling the first inside piezoelectric transducer (24) that is configured to create an acoustic data signal (DS) based on the controller output signal (OS) and to couple the acoustic data signal (DS) into the wall (14) of the container (11),
wherein the outside circuit (13) comprises a receiver circuit (17) having an outside controller (33) and a first outside piezoelectric transducer (30), wherein the receiver circuit (17) is configured to receive the acoustic data signal (DS) by the first outside piezoelectric transducer (30) through the wall (14) of the container (11),
**characterized in that** the transmitter circuit (15) of the inside circuit (12) is configured to create the controller output signal (OS) and/or the acoustic data signal (DS) without sensor information (SI) being contained in the amplitude or phase of the controller output signal (OS) and/or the acoustic data signal (DS).

2. The sensing arrangement in accordance with claim 1,
**characterized in that**
the outside circuit comprises a power supply circuit (18) connected with a power supply (38) and comprising a second outside piezoelectric transducer (42), wherein the power supply circuit (18) is configured to create an acoustic power signal (PS) and to couple the acoustic power signal (PS) into the wall (14) of the container (11) by the second outside piezoelectric transducer (42).

3. The sensing arrangement in accordance with claim 2,
**characterized in that**
the inside circuit comprises a power receiving circuit (16) having a second inside piezoelectric transducer (43) and an energy storage device (45), wherein the power receiving circuit (16) is configured to receive the acoustic power signal (PS) by the second inside piezoelectric transducer (43) through the wall (14) of the container (11).

4. The sensing arrangement in accordance with claim 2 or 3,
**characterized in that**
the power supply circuit (18) is configured to create the acoustic power signal (PS) with a constant oscillating frequency.

5. The sensing arrangement in accordance with any of the preceding claims,
**characterized in that**
the inside controller (23) is directly coupled with the first inside piezoelectric transducer (24) for applying the controller output signal (OS) to the first inside piezoelectric transducer (24).

6. The sensing arrangement in accordance with any of the preceding claims,
**characterized in that**
the transmitter circuit (15) of the inside circuit (12) is configured to create the controller output signal (OS) and/or the acoustic data signal (DS) without sensor information (SI) being contained in the frequency of the acoustic data signal (DS).

7. The sensing arrangement in accordance with any of the preceding claims,
**characterized in that**
the transmitter circuit (15) of the inside circuit (12) is configured to create the controller output signal (OS) and/or the acoustic data signal (DS) in form of a pulse width modulated signal.

8. The sensing arrangement in accordance with any of the preceding claims,
**characterized in that**
the transmitter circuit (15) of the inside circuit (12) is configured to create the controller output signal (OS) and/or the acoustic data signal (DS) such that it comprises at least one sequence (S) formed by one oscillating signal portion (PO) and one constant signal portion (PC).

9. The sensing arrangement in accordance with claim 8,
**characterized in that**
the transmitter circuit (15) of the inside circuit (12) is configured to create the at least one sequence (S) by selecting one of two predefined durations (t1, t2) for the oscillating signal portion (PO) and/or for the constant signal portion (PC), wherein each predefined duration (t1, t2) characterizes a different binary value.

10. The sensing arrangement in accordance with claim 8 or 9,
**characterized in that**
the duration of the at least one sequence (S) varies depending on whether it contains a first duration (t1) or a second duration (t2).

11. The sensing arrangement in accordance with any of the claims 8 to 10,
**characterized in that**
the transmitter circuit (15) of the inside circuit (12) is configured to create the at least one sequence (S) by selecting one of two predefined numbers of oscillations for the oscillating signal portion (PO) wherein each predefined number of oscillations characterizes a different binary value.

12. The sensing arrangement in accordance with any of the claims 8 to 11,
**characterized in that**
the amplitude and/or frequency of the oscillating signal portion (PO) is constant.

13. The sensing arrangement in accordance with any of the preceding claims,
**characterized in that**
the transmitter circuit (15) is configured to convert information to be transmitted including at least the sensor information (SI) from the sensor device (22) into a string of characters (STR) and to convert each character of the string of characters (STR) into a binary word (BW) of multiple binary values.

14. The sensing arrangement in accordance with claim 13,
**characterized in that**
the information to be transmitted contains an identifier that characterizes the type of the sensor information (SI) contained in the information to be transmitted.

15. A method for using a sensing arrangement (10) particularly for sensing a physical parameter inside a closed container (11) and to transmit the respective data through the container wall (14) to the outside of the container (11), wherein the sensing arrangement (10) comprises an inside circuit (12) arranged inside a closed container (11) and an outside circuit (13) arranged outside the closed container (11), comprising the following steps:
- sensing a sensor value (SV) with a sensor device (22) inside the container (11) and providing a sensor information (SI) characterizing the sensor value (SV),
- submitting the sensor information (SI) to an inside controller (23) that creates a controller output signal (OS) based on the sensor information (SI),
- submitting the controller output signal (OS) to a first inside piezoelectric transducer (24) that creates an acoustic data signal (DS) based on the controller output signal (OS) and couples the acoustic data signal (DS) into a wall (14) of the container (11),
- receiving the acoustic data signal (DS) by a first outside piezoelectric transducer (30) of the outside circuit (13) through the wall (14) of the container (11),
**characterized in that**
creating the controller output signal (OS) and/or the acoustic data signal (DS) is performed such that the amplitude or phase of the controller output signal (OS) and/or the acoustic data signal (DS) does not contain sensor information (SI).
